# EUROPEAN PATENT SPECIFICATION

(11) **EP 0 551 335 B1**
(45) Date of publication and mention of the grant of the patent: **08.12.1999**
(21) Application number: 91917226.2
(22) Date of filing: 27.09.1991
(51) Int. Cl.: B29C 67/20, B29C 47/70

(54) **PRODUCTION OF POROUS PLASTIC MATERIALS**
HERSTELLUNG VON PORÖSEN KUNSTSTOFFMATERIALIEN
PRODUCTION DE MATERIAUX PLASTIQUES POREUX

(30) Priority: 01.10.1990 GB 9021344
(43) Date of publication of application: 21.07.1993
(73) Proprietor: ENGEL, Thomas, F-06140 Vence (FR)
(72) Inventor: ENGEL, Thomas, F-06140 Vence (FR)
(74) Representative: Evans, David Charles
(86) International application number: GB9101671
(87) International publication number: WO9205946

(56) References cited:
- WO-A-90/02034
- DE-A- 1 729 065
- GB-A- 1 158 011
- GB-A- 2 092 153
- US-A- 4 375 441
- PATENT ABSTRACTS OF JAPAN vol. 7, no. 221 (M-246)(1366) 30 September 1983 & JP, A,58 116 134 ( KOBE SEIKOSHO K.K. ) 11 July 1983 see abstract

## Description

This invention relates to the production of porous plastic materials and to shaped articles made therefrom. Porous plastic components are well known and have been used for many years. Hitherto, production of such material has been carried out by sintering granules or particles of plastics materials in a mould. In order to achieve uniform properties for such a material it is necessary to achieve uniform conditions of sintering throughout the plastics material during the formation of the shaped porous product. In order to achieve sintering temperature, it is necessary to apply heat to the plastics material; since plastics materials are generally poor conductors of heat, this results in a non-uniform temperature distribution during the sintering step. Furthermore, the use of such sintered materials in high temperature environments has been restricted simply because sintering requires melting or softening of surface lamina of the particles of plastics materials in order to induce fusion at their contact point.

High temperature materials and high strength materials have become available, but methods of production are complex and the materials are necessarily expensive. Porous materials are currently available from a variety of manufacturers formed of nylon 6, polysulfone, polycarbonate polyphthalate carbonate and polytetrafluoroethylene among others.

Porous and microporous plastics materials are much employed for filters and separators and used in the fluidisation of liquids, solids and gases. The usual function of these porous plastic materials is to filter liquids such as water, oil, fuel and chemicals, to purify air, or to separate out components such as dust, asbestos, silicas and heavy metals. Such porous materials find application in the fluidisation of bulk solids for conveying and storing, and also in industrial vacuum cleaning and filtration equipment.

All current methods of producing porous materials rely as an essential step on the presence of a substance which either is gaseous or is capable of becoming gaseous under the processing conditions, such substance being e.g. a gas, chemical blowing agent, or volatile solvent.

As stated above, one of the difficulties of current methods of production of porous plastics materials is the uniformity of porous properties throughout the material. In some uses, such for example, as shoe insoles and dust filters in vacuum cleaners, this is not a problem, but in processes where careful control of particle size or rates of passage of materials through a separator are of importance such as in medical filters, controlled rate release devices and pen nibs, then such control of the particle size becomes of increasing importance. In view of the difficulty of controlling particle or pore size using blowing agents and the like, there is a need for a continuous process for the production of a porous material in which porosity of the material can be controlled without reliance upon blowing agents.

According to one aspect of the present invention, therefore, there is provided a method forming a shaped porous article formed of a plastics material which method comprises working said plastics material to increase the temperature thereof to a level at which the material exhibits a rubber-like nature and forcing said conditioned material through orifice means to cause or ally the material to form discrete particles and thereafter passing a plurality of said particles through shaping means to cause or allow said particles to adhere one to another to form a shaped porous article of said plastics material.

In another aspect of the invention, the material is maintained at said elevated temperature at which the material exhibits a rubber like nature and under pressure to condition the same. The working of the material to increase its temperature may be accompanied by heating thereof; the purpose of working the material to increase the temperature is to ensure substantially uniform heating throughout the material.

The working of the plastics material may be effected initially in a compression chamber, and valve means may be provided to control the maximum pressure to be effective within the chamber. A rapid temperature increase at the end of the working period is effected at least in part by the generation of shear forces within the material. Additional shear forces may be generated by passing the material through said orifice means. This ensures that all the material is at a substantially uniform temperature during the subsequent processing steps. Apparatus such as that described in British Patent Specification No. 1158011 and 1431101 is suitable for the working of the plastics material prior to passage through the orifice means.

Plastics materials which can be used in the process of this invention are those which exhibit a substantially rubber-like nature when heated to slightly below the glass transition temperature and which behave, to some extent, as a cross-linked material. The effect of the heating and conditioning of the material is to maintain the material at its elevated temperature, but at a temperature below that at which it becomes a free flowing melt; thus providing uniformity of temperature distribution. Thus, on forcing the material through the orifice means, the shear stresses induced in the material produce a sudden rise in temperature which results in the material changing its state and effectively breaking up to a plurality of small particles which adhere one to another at their contact points and which can be subsequently be shaped in a die to form either a continuous shaped article or are subsequently molded. The particles formed immediately after passing through the orifice means have just sufficient capacity to stick together, but do not flow to form a homogeneous melt. The result may be a shaped article such, as for example, a layer, pipe, rod or sheet which is formed of cohered, discrete particles and having a distinct and substantially uniform porosity.

The invention has been found to be particularly successful with ultra-high molecular weight polyethylene. This material, typically that commercially available under the trade name "HOSTALEN GUR", has good corrosion and chemical resistance and can, certainly in filter applications, provide significantly longer service. The material is supplied in the form of a powder and has a bulk density as a powder of about 0.2 grams per cubic centimetre to 0.5 grams per cubic centimetre and then can be used in continuous service at temperatures from -250°C to +90°C.

In a preferred aspect of the present invention, the molecular weight of the ultra high molecular weight polyethylene is within the range of 3-7 million. The ultra high molecular weight polyethylene may be heated to a temperature above 136°C and maintained at that temperature within the range of 140-160°C at which temperature it may be forced through the orifice means at a pressure of 4-17 kilograms/cm².

The orifice means may be a breaker plate having a plurality of discrete orifices. It is clear that the porosity of the resultant material is dependant upon the size of the orifices within the orifice means. The orifice means may be a single plate or may be one or more plates used in combination. Additionally, a combination of breaker plates and screens with an array of orifices may be employed.

In a particular aspect of the invention, both the level and the uniformity of the porosity can be controlled. For fine particle size in a microporous product, an appropriate combination of plate and screen is used, for example, the particles may pass into a die which is designed to shape the extrudate; if the die is substantially parallel-sided, and at the melt temperature, the fractured polymer is subjected to comparatively little back pressure as it flows through the die. In this condition, the particles adhere, but spaces are left between them, and a porous material is extruded from the die. If, however, the die is designed to offer significant compression of the flowing particles by presenting a path of reducing area, the particles will be more highly compressed, and a product of lower porosity is produced.

Furthermore, additional control can be exercised by controlling the die temperature; a hotter die presents less back pressure and results in a more porous material. Where a screen is employed in combination with a breaker plate, the screen may serve to control further the particle size, possibly by providing further orifices to oversize material. The screen may be provided either in front or behind the breaker plate, or both in front and behind. Where a multiple breaker plate assembly is employed, a screen or screens may be disposed between individual breaker plates within the assembly. Typical screens are formed of steel mesh.

The Applicant has found that the incorporation of a blowing agent such, for example, as azo-dicarbonamide (1,1-azobis-formamide) such as that commercially available under the trade name "NITROSAN" may assist in the maintenance of the porosity during the shaping or molding step. The reason for this is that as the particles adhere during the forming step, in order to obtain optimum porosity, it is desirable that the particles adhere where they touch without significant flattening. The inclusion of a blowing agent allows the formation of slight positive pressure within the interstices of the packed particle assemblage during the shaping step and serves to maintain sufficient openness of the interstices of the particles to improve porosity. The amount of blowing agent added can be determined largely by experimentation; the addition of too much results in a partially blown product. Amounts within the range of 0.1% to 5% by weight have been found to be satisfactory with amounts preferably within the range of 0.15 to 0.5% by weight.

A proportion of a solvent for the plastics material may be incorporated within the material either prior to or during the working of the material. This is thought to assist in the conditioning step and to assist the adherence of the particles after formation by passing through the orifice means. The presence of a solvent or oligomers of the plastics material may further assist shaping and porosity of the material after it has passed the orifice means. The solvent may be any solvent suitable for the plastics materials employed; such solvents are well known in the art.

In a further aspect of the present invention, cross-linking agents may be included to fix the particulate structure of the materials so formed. Typical cross-linking agents for polyethylene are peroxides such, for example, as dicumyl peroxide but any known cross-linking agent for the plastics material may be employed. The effect of the cross-linking agent is to produce cross-linking. The cross-linking agent selected and the conditioning temperature, should be such that no significant cross-linking takes place or is initiated before the material passes through the orifice means. The plastics material, prior to being subjected to the method of the invention, may also include antioxidants such for example as α-tocopherol, and bisphenols such as those commercially available under the trade name "IRGANOX".

It should be noted, however, that the use of blowing agents, solvents and cross-linking agents are optional ingredients only and assist in the tailoring of the porous properties of the end product.

The invention also includes porous and microporous plastics materials and articles made therefrom when produced by the method of the invention. The temperature rise resulting from passing the material through the breaker plate may be such as to initiate the cross-linking reaction so that significant cross-linking commences only after formation of the discrete particles, or after the shaping of the particles. The mechanism of the invention is not, at present, understood, but it is thought very likely that while the polymer is maintained at said elevated temperature during conditioning, it is partly crystalline even though the temperature is about 190°C. On passing through the fine holes of the breaker plate the temperature rises rapidly and of course the polymer is strongly compressed in these fine holes. As the polymer leaves the holes, it expands suddenly, thus forming distinct particles and becomes porous. In the presence of a blowing agent or solvent (Gas) this sudden expansion is amplified, thus increasing the porosity. It has been observed that if the orifices within the breaker plate are large enough, then the plastics material simply flows straight through. When the size of the orifice(s) is reduced, porosity increases.

In a further aspect of the invention, the shaping of the material after passage through the orifice means can also affect the resultant shaped product. For example, the back pressure generated by the shaping die appears to affect the final product. The material leaving the orifice means may be in the form of filaments or fibres. If the die has a large opening the fibers flow straight through. As soon as the opening is reduced in size the die fills and out comes a continuous rod which is packed loosely like a non-woven fabric. If the die is conical then the compacting of the fibers is higher. What has been observed is that the fiber is porous by itself, and that the compacting of the fiber makes the product porous too.

The invention has been found to work well with plastics materials that do not have a melt index; for example ultra high molecular weight polyethylene at 200°C has a rubber like nature; it does not stick. Once such a material has passed the orifice means, it does not coalesce.

Following is a description by way of example only and with reference to the accompanying informal drawing of methods of carrying the invention into effect.

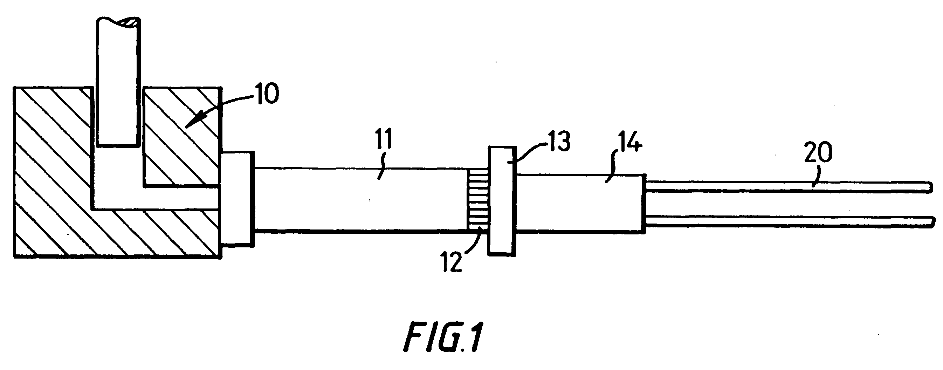

In the drawing:-
Figure 1 is a diagram of the apparatus for forming a microporous tube.

A compressor 10 has a structure generally along the lines described in British Patent Specification No. 1158011. The extruder is provided with an outlet barrel 11 constituting a plasticising or conditioning chamber, a breaker plate 12 which comprises a plate fitted across the end of barrel 11 and having a plurality of longitionally extending orifices set in an array thereacross, a back-up screen 13 and a shaping dye 14.

### EXAMPLE 1

Ultra high molecular weight polyethylene commercially available under the trade name "HOSTALEN GUR 412" is premixed with 1.75% of dicumyl peroxide cross-linking agent and 0.5% by weight of a solvent and is then introduced into the compression chamber and subjected to working by the machine in the manner described in U.K. Patent Specification No. 1158011 together with external heat to raise the temperature of the material uniformally to 136°C. The material is maintained at a temperature of 140 to 150°C in a substantially plastic rubber-like condition within the conditioning chamber and then is urged under pressure of 16 kilograms per square centimetre through the orifices of the breaker plate. After passage though the breaker plate, the material is then shaped in the die 14 and thereafter withdrawn as an extruded tube 20 therefrom.

### EXAMPLE 2

In another example of the present invention, ultra high molecular weight polyethylene, commercially available under the trade name "HOSTALEN GUR 412" was mixed with 0.7% by weight of solvent and then processed as described above. The resultant porous material can be heat welded, solvent welded or glued to form composite structures, either in the form of shapes and laminates. Such materials permit the formation of fibres, and porous plastics laminates which have a variety of uses in industry.

### EXAMPLE 3

Example 2 was repeated, but the solvent was omitted. As before, the resultant porous material could be heat welded, solvent welded or glued to form composite structures either in the form of shaped or laminates.

In each of the above examples, the resultant tube is microporous and allows the passage of gas and liquids while retaining particles upon its surface. The process can be operated as a substantially continuous process and the pipe or tube drawn off and after cooling rolled for subsequent use or for sale.

### EXAMPLE 4

Ultra high molecular weight polyethylene commercially available under the trade name LUPOLEN 300 (molecular weight 6 million, particle size largely between 100 and 300 microns) was mixed with 0.5% by weight of ammonium carbonate and 0.5% by weight of a stearamide slip agent commercially available under the trade name SYNTEWAX. Use of slip agents in the processing of plastics is well established in the art. The mixture was processed in the manner described for the previous examples.

The resulting tube was a rigid porous material of comparatively high strength. The tube had a wall thickness of 6 mm and an external diameter of 60.4 mm. Its porosity can be varied by altering the back pressure generated by the shaping die, whereby air permeability values between about 200 and 600 m³, per sq. metre per minute at a pressure difference of 20 psi (138 kN/sq. metre) can be obtained.

### EXAMPLE 5

Example 5 was repeated using 1% by weight ammonium carbonate instead of 0.5% air permeabilities between about 400 and 900 m³ per sq. metre per minute were obtained.

The tubes so produced find applications in sewage aeration, monitoring and abstraction of methane gas in landfill sites, and in piezometry (water sampling in the ground).

### EXAMPLE 6

LUPOLEN 300 ultra high molecular weight polyethylene was processed as described in Example 4 above except that the only additive was a stearamide slip agent SYNTEWAX present in an amount of 0.5% by weight.

The resulting rigid porous tube had a wall thickneess of 6.5 mm and an external diameter of 35 mm. Among other applications, the tube can be used for the aeration of liquid flux used for the cleaning of surfaces about to be soldered.

Depending on the back pressure generated by the shaping die, this product had an air permeability of up to about 360 m³ per sq. metre per minute at a pressure difference of 20 psi (138 kN/sg. metre).

The tubes produced in the last three examples are too rigid to be conveniently rolled up and are therefore cut to the desired length.

Porous products in accordance with the invention and as described above may be used in applicators, air regulator filters, aquarium aerators, biomedical filters, breather vents, desiccant holders, controlled metering devices, marker tips, frangrance reservoirs, membrane support media, foaming devices, reagent filters, pneumatic mufflers, blood serum filters, industrial filters, water-conditioning filters, filtration support media, oxygen humidifiers, fuel filters, battery flame arrestors, ETO vents and chromatography frits.

## Claims

1. A method of forming a shaped porous article formed of a plastics material characterised in that the method comprises working said plastics material to increase the temperature thereof to a level at which the material exhibits a rubber-like nature and forcing the conditioned material through orifice means to cause or ally the material to form discrete particles and thereafter passing said particles through shaping means to cause or ally a plurality of said particles to adhere one to another to form a shaped porous article of said plastics material.

2. A method as claimed in claim 1 characterised in that after increasing the temperature to a level at which the material exhibits a rubber-like nature, the material is maintained at said elevated temperature and under pressure to condition the same prior to passage through the said orifice means.

3. A method as claimed in claim 1 or claim 2 characterised in that the working of the material to increase its temperature is accompanied by external heating thereof.

4. A method as claimed in any preceding claim characterised in that the working of the material is performed in a compression chamber incorporating valve means to control the maximum pressure to be effective within the chamber.

5. A method as claimed in any preceding claim characterised in that shear forces are generated as the material passes said orifice means.

6. A method as claimed in any preceding claim characterised in that the plastics material is an ultra high molecular weight polyethylene.

7. A method as claimed in any preceding claim characterised in that the orifice means comprises a breaker plate having a plurality of discrete orifices.

8. A method as claimed in any one of claims 1 to 7 characterised in that the orifice means comprises a plurality of plates used in combination.

9. A method as claimed in claim 7 or 8 characterised in that one or more screens may be employed in combination with said orifice means.

10. A method as claimed in any preceding claim characterised in that a proportion of blowing agent is incorporated in the plastics material.

11. A method as claimed in claim 10 characterised in that the blowing agent is present in an amount of 0.1% to 5.0% by weight.

12. A method as claimed in claim 11 characterised in that the proportion of blowing agent is within the range of 0.15 to 0.50% by weight.

13. A method as claimed in any preceding claim characterised in that a proportion of the solvent for the plastics material is incorporated in the material either prior to or during working of the material.

14. A method as claimed in any preceding claim characterised in that a proportion of cross-linking agent is incorporated within the plastics material to fix the particulate structure of the material so formed.

15. A method as claimed in claim 14 characterised in that the plastics material is a polyethylene, the cross-linking agent is a dicumyl peroxide.

16. A method as claimed in any preceding claim characterised in that a proportion of anti-oxidant is incorporated in the plastics material.

## Patentansprüche

1. Verfahren zur Bildung eines porösen Formkörpers aus einem Kunststoffmaterial, dadurch gekennzeichnet, daß man das Kunststoffmaterial zur Erhöhung seiner Temperatur auf ein Niveau, bei dem das Material sich kautschukartig verhält, bearbeitet und das konditionierte Material durch eine mit Öffnungen versehene Einrichtung preßt, damit das Material diskrete Teilchen ausbildet, und dann die Teilchen durch eine Formgebungseinrichtung führt, damit mehrere der Teilchen aneinander haften und so einen porösen Formkörper aus dem Kunststoffmaterial bilden.

2. Verfahren nach Anspruch 1, dadurch gekennzeichnet, daß man nach dem Erhöhen der Temperatur auf ein Niveau, bei dem sich das Material kautschukartig verhält, das Material zur Konditionierung vor dem Durchgang durch die mit Öffnungen versehene Einrichtung bei der erhöhten Temperatur und unter Druck hält.

3. Verfahren nach Anspruch 1 oder 2, dadurch gekennzeichnet, daß man das Material bei der Bearbeitung zur Erhöhung seiner Temperatur von außen beheizt.

4. Verfahren nach einem der vorhergehenden Ansprüche, dadurch gekennzeichnet, daß man die Bearbeitung des Materials in einer Verdichtungskammer mit Ventileinrichtungen zur Steuerung des in der Kammer herrschenden Maximaldrucks durchführt.

5. Verfahren nach einem der vorhergehenden Ansprüche, dadurch gekennzeichnet, daß man beim Durchführen des Materials durch die mit Öffnungen versehene Einrichtung Scherkräfte erzeugt.

6. Verfahren nach einem der vorhergehenden Ansprüche, dadurch gekennzeichnet, daß man als Kunststoffmaterial ein ultrahochmolekulares Polyethylen einsetzt.

7. Verfahren nach einem der vorhergehenden Ansprüche, dadurch gekennzeichnet, daß man als mit Öffnungen versehene Einrichtung eine Lochscheibe mit mehreren diskreten Öffnungen einsetzt.

8. Verfahren nach einem der Ansprüche 1 bis 7, dadurch gekennzeichnet, daß man als mit Öffnungen versehene Einrichtung mehrere in Kombination verwendete Scheiben einsetzt.

9. Verfahren nach Anspruch 7 oder 8, dadurch gekennzeichnet, daß in Kombination mit der mit Öffnungen versehenen Einrichtung ein oder mehrere Siebe eingesetzt werden können.

10. Verfahren nach einem der vorhergehenden Ansprüche, dadurch gekennzeichnet, daß man in das Kunststoffmaterial einen Treibmittelanteil einarbeitet.

11. Verfahren nach Anspruch 10, dadurch gekennzeichnet, daß man das Treibmittel in einer Menge von 0,1 bis 5,0 Gew.-% einsetzt.

12. Verfahren nach Anspruch 11, dadurch gekennzeichnet, daß man das Treibmittel in einem Anteil von 0,15 bis 0,5 Gew.-% einsetzt.

13. Verfahren nach einem der vorhergehenden Ansprüche, dadurch gekennzeichnet, daß man entweder vor oder während der Bearbeitung des Materials einen Anteil an Lösungsmittel für das Kunststoffmaterial in das Material einarbeitet.

14. Verfahren nach einem der vorhergehenden Ansprüche, dadurch gekennzeichnet, daß man in das Kunststoffmaterial einen Vernetzeranteil einarbeitet, durch den die teilchenförmige Struktur des so gebildeten Materials fixiert wird.

15. Verfahren nach Anspruch 14, dadurch gekennzeichnet, daß man als Kunststoffmaterial ein Polyethylen und als Vernetzer Dicumylperoxid einsetzt.

16. Verfahren nach einem der vorhergehenden Ansprüche, dadurch gekennzeichnet, daß man in das Kunststoffmaterial einen Antioxidansanteil einarbeitet.

## Revendications

1. Procédé de formation d'un article poreux mis en forme composé d'un matériau plastique, caractérisé en ce que la méthode comprend les étapes consistant à travailler ledit matériau plastique en vue d'augmenter sa température jusqu'à un niveau auquel le matériau présente une nature similaire au caoutchouc, et à forcer le matériau conditionné à travers un moyen d'orifice pour amener ou permettre au matériau de former des particules discrètes, et ensuite à faire passer lesdites particules à travers un moyen de mise en forme pour amener ou permettre à une pluralité desdites particules d'adhérer les unes aux autres en vue de former un article poreux mis en forme dudit matériau plastique.

2. Procédé selon la revendication 1, caractérisé en ce qu'après l'augmentation de la température à un niveau auquel le matériau présente une nature similaire au caoutchouc, le matériau est maintenu à ladite température élevée et sous-pression pour le conditionner avant son passage à travers ledit moyen d'orifice.

3. Procédé selon la revendication 1 ou la revendication 2, caractérisé en ce que le travail du matériau en vue d'augmenter sa température est accompagné du chauffage externe de celui-ci.

4. Procédé selon l'une quelconque des revendications précédentes, caractérisé en ce que le travail du matériau est réalisé dans une enceinte de compression comprenant un moyen de vanne pour réguler la pression maximale de manière à ce qu'elle soit efficace dans l'enceinte.

5. Procédé selon l'une quelconque des revendications précédentes, caractérisé en ce que des forces de cisaillement sont générées à mesure que le matériau passe dans ledit moyen d'orifice.

6. Procédé selon l'une quelconque des revendications précédentes, caractérisé en ce que le matériau plastique est un polyéthylène à poids moléculaire extrêmement élevé.

7. Procédé selon l'une quelconque des revendications précédentes, caractérisé en ce que le moyen d'orifice comprend une plaque perforée ayant une pluralité d'orifices discrets.

8. Procédé selon l'une quelconque des revendications 1 à 7, caractérisé en ce que le moyen d'orifice comprend une pluralité de plaques utilisées en association.

9. Procédé selon la revendication 7 ou 8, caractérisé en ce qu'un ou plusieurs tamis peuvent être employés en association avec ledit moyen d'orifice.

10. Procédé selon l'une quelconque des revendications précédentes, caractérisé en ce qu'une proportion d'agent gonflant est incorporée dans le matériau plastique.

11. Procédé selon la revendication 10, caractérisé en ce que l'agent gonflant est présent en une quantité de 0,1% à 5,0% en poids.

12. Procédé selon la revendication 11, caractérisé en ce que la proportion d'agent gonflant est dans la gamme de 0,15 à 0,50% en poids.

13. Procédé selon l'une quelconque des revendications précédentes caractérisé en ce qu'une proportion du solvant pour le matériau plastique est incorporée dans le matériau soit avant soit pendant le travail du matériau.

14. Procédé selon l'une quelconque des revendications précédentes, caractérisé en ce qu'une proportion d'agent de réticulation est incorporée dans le matériau plastique pour fixer la structure particulaire du matériau ainsi formé.

15. Procédé selon la revendication 14, caractérisé en ce que le matériau plastique est un polyéthylène, et l'agent de réticulation est un peroxyde de dicumyle.

16. Procédé selon l'une quelconque des revendications précédentes, caractérisé en ce qui une proportion d'antioxydant est incorporée dans le matériau plastique.
